# FASCICULE DE BREVET EUROPEEN

(11) **EP 2 603 742 B1**
(45) Date de publication et mention de la délivrance du brevet: **02.03.2016**
(21) Numéro de dépôt: 11757392.3
(22) Date de dépôt: 11.08.2011
(51) Int. Cl.: F24D 19/10

(54) **PROCÉDÉ ET INSTALLATION DE RÉGULATION DE TEMPÉRATURE DANS UN BÂTIMENT**
VERFAHREN UND VORRICHTUNG ZUR TEMPERATURREGULIERUNG IN EINEM GEBÄUDE
DEVICE AND METHOD FOR TEMPERATURE REGULATION IN A BUILDING

(30) Priorité: 13.08.2010 FR 1056597
(43) Date de publication de la demande: 19.06.2013
(73) Titulaire: Compagnie Industrielle D'Applications Thermiques, 01350 Culoz (FR)
(72) Inventeur: LATOUR, Thierry, F-73310 Ruffieux (FR); ALTAZIN, Marc, F-73100 Brison Saint Innocent (FR); AUZENET, Eric, F-01350 Culoz (FR); ARNAUD, Samuel, F-69100 Villeurbanne (FR)
(74) Mandataire: Myon, Gérard Jean-Pierre
(86) Numéro de dépôt international: PCT/FR2011/051903
(87) Numéro de publication internationale: WO 2012/020205

(56) Documents cités:
- FR-A1- 2 679 016
- FR-A1- 2 760 519

## Description

La présente invention concerne une installation de régulation de température dans un bâtiment, cette installation comprenant une pompe à chaleur, ainsi qu'un procédé de pilotage d'une telle installation.

Il est connu de réguler la température d'un bâtiment, c'est-à-dire de le chauffer ou de le rafraîchir, au moyen d'une pompe à chaleur. Dans ce type d'installation, il est connu de commander la pompe à chaleur par une consigne de température, en sortie de pompe, du fluide caloporteur, qui peut être de l'eau additivée ou un autre liquide. Cette consigne de température est fixée en fonction de la température extérieure et des caractéristiques de déperdition thermique du bâtiment. La pompe à chaleur fonctionne indépendamment de l'occupation des bâtiments et donc des besoins réels en chauffage ou rafraîchissement. Il en résulte une surconsommation de courant pour alimenter la pompe à chaleur.

FR-A-2 679 016 divulgue une installation de chauffage et de production d'eau chaude pour pompe à chaleur, dans laquelle un compresseur agit sur un circuit de fluide frigorigène, pour chauffer un réservoir d'eau chaude sanitaire. Le fluide frigorigène permet également de chauffer une piscine, au moyen d'un échangeur. Le circuit de fluide frigorigène comprend une installation de chauffage au sol, qui comporte plusieurs branches correspondant chacune à une pièce d'habitation. Chaque branche est associée à une vanne de régulation du débit du liquide frigorigène, ce qui permet de réguler séparément la température de chaque pièce d'habitation. La consommation électrique de la pompe à chaleur n'est pas optimisée en fonction des besoins réels de l'installation.

C'est à ces inconvénients qu'entend plus particulièrement remédier l'invention en proposant un procédé de chauffage ou de rafraîchissement d'une installation de régulation de température qui permet d'optimiser la consommation électrique de la pompe à chaleur en fonction des besoins réels en chauffage ou rafraîchissement du bâtiment.

A cet effet, l'invention concerne un procédé de pilotage d'une installation de régulation de température dans un bâtiment, cette installation comprenant une pompe à chaleur agissant sur la température d'un fluide caloporteur et au moins un émetteur thermique dont l'alimentation en fluide caloporteur à partir de la pompe à chaleur est contrôlée par une vanne de régulation, procédé dans lequel le fonctionnement de la pompe à chaleur est piloté au moyen d'une consigne de température du fluide caloporteur en entrée ou en sortie de la pompe à chaleur. Ce procédé est caractérisé en ce qu'il comprend des étapes consistant à :
a) acquérir des informations relatives à l'ouverture de la ou des vanne(s) de régulation ;
b) ajuster la valeur de la consigne de température de la pompe à chaleur en fonction des informations acquises à l'étape a).

Grâce à l'invention, l'acquisition des informations relatives à l'ouverture de la ou des vanne(s) de régulation permet de connaître l'image des besoins réels en chauffage ou rafraîchissement. Sur cette base, on peut optimiser globalement les conditions de fonctionnement de la pompe à chaleur et du ou des émetteurs thermiques en adaptant la valeur de la consigne de température aux besoins réels en chauffage ou rafraîchissement du bâtiment, tout en s'assurant de ne pas surconsommer du courant électrique au niveau d'autres composants auxiliaires de distribution et de ventilation du système. On économise ainsi du courant électrique.

Selon des aspects avantageux mais non obligatoires de l'invention, un tel procédé peut incorporer une ou plusieurs des caractéristiques suivantes, prises dans toute combinaison techniquement admissible :
- Le procédé comprend une étape supplémentaire consistant à déterminer le taux d'ouverture maximum des vannes de régulation de différents émetteurs thermiques et, lors de l'étape b), l'ajustement de la valeur de la consigne de température est effectué en fonction du taux d'ouverture maximum.
- Le procédé comprend une étape supplémentaire consistant à effectuer une moyenne sur une période prédéterminée du taux d'ouverture maximum des vannes de régulation des différents émetteurs thermiques et, lors de l'étape b), l'ajustement de la valeur de la consigne est effectué en fonction du taux d'ouverture maximum moyen.
- Le procédé comprend au moins une étape supplémentaire consistant à comparer le taux d'ouverture maximum des vannes de régulation des différents émetteurs thermiques avec au moins une valeur de seuil et, lors de l'étape b), l'ajustement de la valeur de consigne est effectué en fonction du résultat de cette comparaison.
- Le procédé comprend au moins une étape supplémentaire consistant à comparer le taux d'ouverture maximum des vannes de régulation des différents émetteurs thermiques avec une première valeur de seuil et avec une deuxième valeur de seuil supérieure à la première valeur de seuil et, lors de l'étape b), la valeur de consigne est diminuée si ce taux d'ouverture maximum est inférieur à la première valeur de seuil, la valeur de consigne est maintenue constante si ce taux d'ouverture maximum est compris entre les deux valeurs de seuil, et la valeur de consigne est augmentée si ce taux d'ouverture maximum est supérieur à la deuxième valeur de seuil. Dans ce cas, la première valeur de seuil est, par exemple, égale à 80 % et la deuxième valeur de seuil est, par exemple, égale à 95 %.
- Le fonctionnement de la pompe à chaleur est piloté en contrôlant l'alimentation électrique d'au moins un moteur électrique appartenant à la pompe à chaleur en fonction de la valeur de la consigne de température ajustée à l'étape b).
- Les étapes a) et b) sont effectuées à intervalles réguliers, avec une fréquence comprise entre deux et dix minutes, de préférence de l'ordre de cinq minutes.

L'invention concerne également une installation permettant de mettre en oeuvre le procédé décrit ci-dessus et, plus spécifiquement, une installation comprenant une pompe à chaleur agissant sur la température d'un fluide caloporteur, au moins un émetteur thermique, dont l'alimentation en fluide caloporteur à partir de la pompe à chaleur est contrôlée par une vanne de régulation, et une unité de commande apte à piloter la pompe à chaleur au moyen d'une consigne de température du fluide caloporteur en entrée ou en sortie de la pompe à chaleur. Cette installation est caractérisée en ce qu'elle comprend des moyens de détection de l'ouverture des vannes de régulation et des moyens de transmission, à partir des moyens de détection et vers l'unité de commande, d'une information relative à l'ouverture des vannes de régulation et en ce que l'unité de commande est apte à ajuster la valeur de consigne de température en fonction de l'information reçue des moyens de détection.

De façon avantageuse, la pompe à chaleur comprend un moteur électrique piloté par l'unité de commande en fonction de la valeur de consigne de température.

L'invention sera mieux comprise et d'autres avantages de celle-ci apparaîtront plus clairement à la lumière de la description qui va suivre d'un procédé et d'une installation conformes à son principe, donnée uniquement à titre d'exemple et faite en référence aux dessins annexés dans lesquels :
- la figure 1 est une représentation schématique d'une installation de régulation de température conforme à l'invention,
- la figure 2 est un schéma bloc d'un procédé de pilotage de l'installation de la figure 1 dans le cas du fonctionnement de l'installation en mode chauffage, et
- la figure 3 est un schéma bloc d'un autre procédé de pilotage de l'installation de la figure 1 dans le cas du fonctionnement de l'installation en mode rafraîchissement.

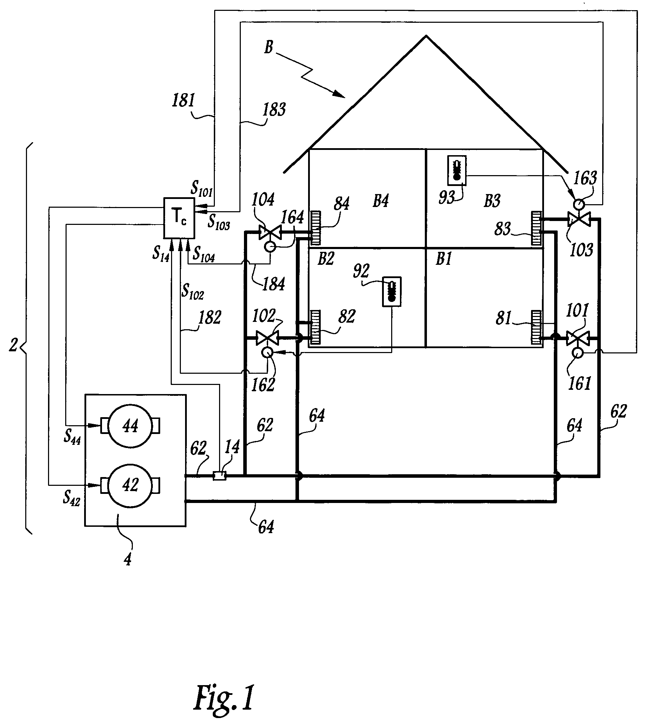

La figure 1 représente schématiquement une installation de chauffage et rafraîchissement 2 d'un bâtiment d'habitation B qui comprend une cuisine B1, un salon B2, une chambre B3 et une salle de bains B4.

L'installation de chauffage et rafraîchissement 2 comprend une pompe à chaleur 4 qui agit sur un fluide caloporteur alimentant, par des conduites aller 62, des émetteurs thermiques 81, 82, 83 et 84 répartis dans les pièces B1, B2, B3 et B4. La pompe à chaleur 4 peut être toute machine refroidissant une source froide et chauffant une source chaude. Des conduites retour 64 permettent de ramener le fluide caloporteur des émetteurs thermiques 81 à 84 vers la pompe à chaleur 4.

Le fluide caloporteur peut être de l'eau pure ou additivée, ou tout fluide à l'état liquide.

La pompe à chaleur 4 comprend des moyens non représentés d'échange thermique entre le fluide caloporteur et un autre fluide, extérieur au bâtiment B. Selon le type de la pompe à chaleur 4, ces moyens d'échange thermique comprennent un ventilateur, un compresseur ou un autre matériel entraîné par un moteur électrique 42. Par ailleurs, la pompe à chaleur 4 comprend un circulateur pour le fluide caloporteur, non représenté et entraîné par un moteur électrique 44.

Les émetteurs thermiques 81 à 84 peuvent être passifs, comme des radiateurs, ou à convection forcée, comme des ventilo-convecteurs. La quantité de chaleur délivrée par les émetteurs thermiques 81 à 84 peut être contrôlée manuellement, comme c'est le cas dans les pièces B1 et B4, ou au moyen d'un thermostat 92 ou 93, comme c'est le cas dans les pièces B2 et B3.

Une vanne de régulation proportionnelle 101 permet de contrôler l'apport en fluide caloporteur de l'émetteur thermique 81 et donc la quantité de chaleur délivrée à la pièce B1 par cet émetteur. La vanne de régulation 101 est montée sur la conduite aller 62, au voisinage de l'émetteur thermique 81. Il en va de même pour trois vannes de régulation proportionnelles 102, 103 et 104 respectivement associées à chacun des émetteurs thermiques 82, 83 et 84. Les vannes de régulation 101 et 104 sont commandées manuellement, alors que les vannes 102 et 103 sont commandées par les thermostats 92 et 93.

L'installation 2 comprend également une unité de commande 12 qui délivre respectivement aux moteurs 42 et 44 des signaux de commande S₄₂ et S₄₄.

Un capteur de température 14 est placé sur la conduite aller 62 en sortie de la pompe à chaleur 4 et délivre à l'unité de commande 12 un signal S₁₄ comprenant une information relative à la température du fluide caloporteur en sortie de la pompe à chaleur 4.

En fonctionnement, l'unité de commande 12 calcule, notamment en fonction des conditions extérieures de température et du modèle thermique du bâtiment B, une consigne de température T_{c} du fluide caloporteur en sortie de la pompe à chaleur. L'unité de commande 12 pilote la pompe à chaleur 4 en fonction de la consigne de température T_{c} en ajustant les signaux S₄₂ et S₄₄. Le capteur 14 permet d'avoir un fonctionnement en boucle fermée.

Un boîtier de contrôle 161 est monté sur la vanne 101 et détecte le taux d'ouverture de cette vanne 101. Une liaison filaire 181 relie le boîtier de contrôle 161 avec l'unité de commande 12 et permet de délivrer à celle-ci un signal S₁₀₁ représentatif du taux d'ouverture de la vanne 101. De la même manière, des boîtiers de contrôle 162, 163 et 164 sont installés sur les vannes 102, 103 et 104 et reliés à l'unité de commande 12 par des liaisons filaires 182, 183 et 184 qui transmettent des signaux S₁₀₂, S₁₀₃ et S₁₀₄ représentatifs du taux d'ouverture des vannes 102, 103 et 104.

Ainsi, l'unité de commande 12 peut déterminer la consigne de température T_{c} en tenant compte du taux d'ouverture des vannes 101 à 104.

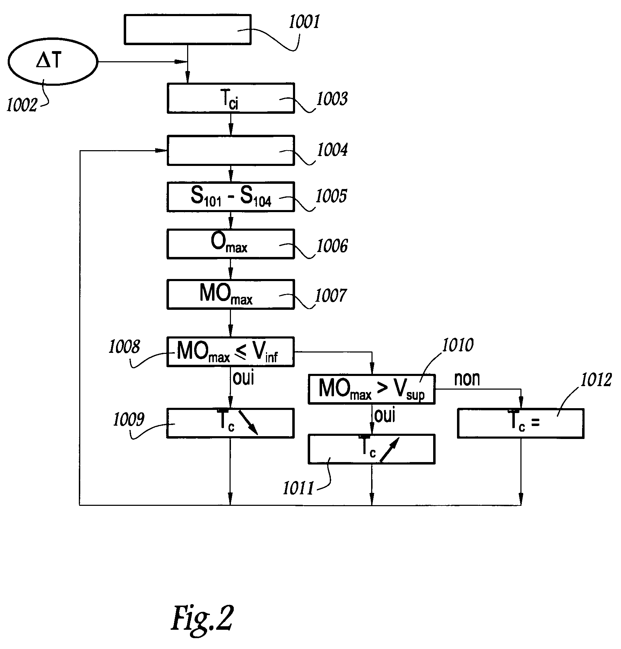

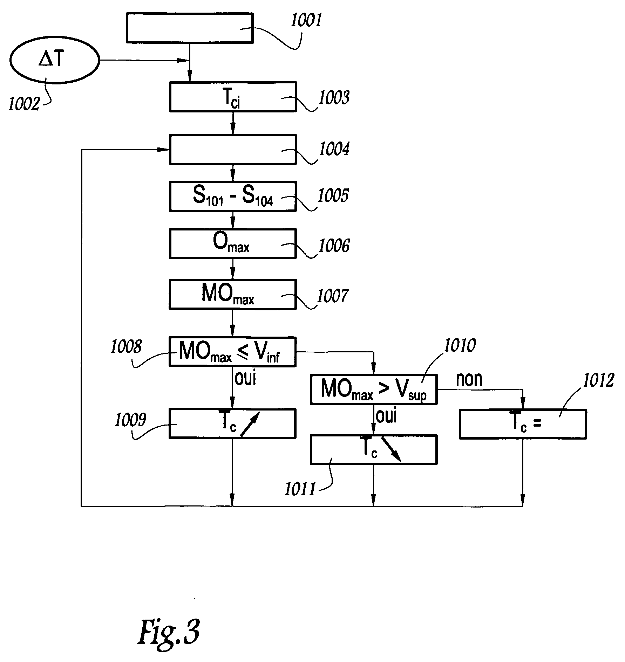

Les figures 2 et 3 représentent le procédé de pilotage de l'installation de la figure 1. La figure 2 montre ce procédé pour un fonctionnement de la pompe à chaleur 4 en mode chauffage et la figure 3 pour un fonctionnement de la pompe à chaleur 4 en mode rafraîchissement. Le procédé décrit ci-dessous est commun aux deux modes de fonctionnement, excepté pour des étapes 1009 et 1010 du procédé.

Le fonctionnement de l'installation 2 est initialisé lors d'une étape 1001. Dans une étape 1002, on mesure la différence de température ΔT entre l'intérieur et l'extérieur du bâtiment B au moyen de capteurs non représentés. Dans une étape 1003, l'unité de commande 12 calcule une consigne de température initiale T_{ci}. Dans une étape 1004, l'unité de commande 12 pilote la pompe à chaleur 4 en fonction de la consigne de température. Après un intervalle de temps correspondant à la stabilisation de l'installation 2 et dans une étape 1005, l'unité de commande 12 acquiert des informations relatives aux taux d'ouverture des vannes 101 à 104 en recevant les signaux S₁₀₁ à S₁₀₄. Dans une étape 1006, l'unité de commande 12 détermine parmi les différents taux d'ouverture des vannes de régulation 101 à 104, le taux d'ouverture maximum Oₘₐₓ de celles-ci. Les étapes 1005 et 1006 sont effectuées à intervalles réguliers, toutes les cinq minutes par exemple. Une fois que quatre acquisitions ont été effectuées, et dans une étape 1007, l'unité de commande 12 calcule le taux d'ouverture maximum moyen MOₘₐₓ des vannes de régulation 101 à 104 sur les quatre dernières acquisitions. On obtient ainsi une moyenne glissante dans le temps des taux d'ouvertures maximum Oₘₐₓ des vannes de régulation 101 à 104.

Dans une étape 1008, l'unité de commande 12 compare la valeur de MOₘₐₓ à une première valeur de seuil V_{inf}. En pratique, V_{inf} est fixée, par exemple, à 80 %. Lorsque la valeur de MOₘₐₓ est inférieure ou égale à V_{inf}, cela signifie que toutes les vannes de régulation 101 à 104 de l'installation 2 sont relativement peu ouvertes et n'utilisent qu'une partie de l'énergie thermique délivrée par la pompe à chaleur, ce qui induit une perte de rendement de l'installation 2.

Si la comparaison de l'étape 1008 montre que la valeur de MOₘₐₓ est inférieure ou égale à la valeur de seuil V_{inf}, l'unité 12 passe à une étape 1009. Dans le cas contraire, l'unité 12 passe à une étape 1010.

Dans l'étape 1009, l'unité de commande 12 détermine une nouvelle consigne de température T_{c}. Pour le fonctionnement en mode chauffage représenté à la figure 2, la nouvelle consigne T_{c} est plus faible que la précédente, par exemple de 2°C. Pour le fonctionnement en mode rafraîchissement représenté à la figure 3, la nouvelle consigne de température T_{c} est plus élevée que la précédente, par exemple de 2°C. Puis, la nouvelle consigne T_{c} déterminée à l'étape 1009 est utilisée par l'unité de commande 12 au moyen des signaux S₄₂ et S₄₄ pour piloter la pompe à chaleur 4 dans une nouvelle mise en oeuvre de l'étape 1004. Le rendement de l'installation s'en trouve avantageusement amélioré, dans les deux modes de fonctionnement.

Dans l'étape 1010, l'unité de commande 12 compare la valeur de MOₘₐₓ à la deuxième valeur de seuil Vₛᵤₚ. En pratique, Vₛᵤₚ est fixée, par exemple, à 95 %. Lorsque la valeur de MOₘₐₓ est supérieure à Vₛᵤₚ, cela signifie que la consigne de température T_{c} délivrée par la pompe à chaleur 4 est potentiellement trop faible pour qu'au moins un émetteur thermique 81 à 84 puisse fournir une puissance thermique suffisante dans au moins une pièce B1 à B4 du bâtiment B.

Si la comparaison de l'étape 1010 montre que la valeur de MOₘₐₓ est strictement supérieure à la valeur de seuil Vₛᵤₚ, alors l'unité 12 passe à une étape 1011. Sinon elle passe à une étape 1012.

Dans l'étape 1011, l'unité de commande 12 détermine une nouvelle valeur de T_{c}. Pour le fonctionnement en mode chauffage représenté à la figure 2, la nouvelle consigne T_{c} est plus élevée que la précédente, par exemple de 2°C. Pour le fonctionnement en mode rafraîchissement représenté à la figure 3, la nouvelle consigne de température T_{c} est plus faible que la précédente par exemple de 2°C. Puis, la nouvelle consigne de température T_{c} déterminée à l'étape 1011 est utilisée par l'unité de commande 12 au moyen des signaux S₄₂ et S₄₄ pour piloter la pompe à chaleur 4 dans une nouvelle mise en oeuvre de l'étape 1004.

Si, à l'étape 1010, la valeur de MOₘₐₓ est inférieure ou égale à la deuxième valeur de seuil Vₛᵤₚ, cela signifie que toutes les vannes de régulation 101 à 104 ont un taux d'ouverture permettant à l'installation d'avoir un rendement optimal. Dans l'étape 1012, l'unité de commande 12 maintient la consigne de température T_{c}. Puis, la consigne de température T_{c} déterminée à l'étape 1012 est utilisée par l'unité de commande 12 au moyen des signaux S₄₂ et S₄₄ dans une nouvelle mise en oeuvre de l'étape 1004.

Ainsi, les étapes 1004 à 1012 permettent à l'unité de commande 12 de piloter les moteurs 42 et 44 de la pompe à chaleur 4 en tenant compte des taux d'ouverture des vannes de régulation 101 à 104, c'est-à-dire de la puissance thermique effectivement nécessaire aux émetteurs thermiques 81 à 84. En ajustant la consigne de température T_{c}, on peut ainsi réduire la consommation électrique des moteurs 42 et 44 de la pompe à chaleur 4.

Après chaque nouvelle mise en oeuvre de l'étape 1004, les étapes 1005 à 1012 sont répétées en utilisant dans l'étape 1007 les dernières valeurs acquises de Oₘₐₓ.

Selon une variante de l'invention non représentée, le capteur de température 14 peut être placé sur la conduite retour 64 en entrée de la pompe à chaleur 4, et délivrer à l'unité de commande 12 un signal comprenant une information relative à la température du fluide caloporteur en entrée de la pompe à chaleur 4. Dans ce cas, en fonctionnement, l'unité de commande 12 calcule, notamment en fonction des conditions extérieures de température et du modèle thermique du bâtiment, une consigne de température du fluide caloporteur en entrée de la pompe à chaleur 4.

Selon une variante non représentée de l'invention, les liaisons filaires 181 à 184 peuvent être remplacées par des liaisons sans fil, notamment des liaisons radio.

Suivant une autre variante de l'invention, les boîtiers de contrôle 161 à 164 peuvent être supprimés et l'information relative au degré d'ouverture des différentes vannes de régulation 101 à 104 peut être obtenue à partir des signaux de commande de ces vannes qui proviennent soit d'un bouton de commande placé dans les pièces B1 et B4, soit des thermostats 92 et 93.

Selon une autre variante non représentée de l'invention, les valeurs de seuil V_{inf} et Vₛᵤₚ peuvent être ajustées, par exemple en fonction du lieu d'implantation et des usages du bâtiment B.

L'invention a été représentée dans le cas de son utilisation pour le chauffage d'un bâtiment d'habitation. Elle est toutefois applicable au chauffage de tout type de bâtiments, notamment les bâtiments tertiaires.

L'intervalle de temps entre deux étapes 1005 d'acquisition des informations S₁₀₁ à S₁₀₄ relatives à l'ouverture de la ou des vanne(s) de régulation 101 à 104 est choisi entre 2 et 10 minutes.

L'invention est représentée avec un schéma de distribution de fluide caloporteur simple. Cependant, elle peut comprendre une structure de distribution comportant un ballon de stockage et une ou plusieurs bouteilles de mélange.

## Revendications

1. Procédé de pilotage d'une installation (2) de régulation de température dans un bâtiment (B), cette installation comprenant une pompe à chaleur (4) agissant sur la température d'un fluide caloporteur et au moins un émetteur thermique (81-84) dont l'alimentation en fluide caloporteur à partir de la pompe à chaleur (4) est contrôlée par une vanne de régulation (101-104), procédé dans lequel le fonctionnement de la pompe à chaleur (4) est piloté (1004) au moyen d'une consigne de température (T_{c}) du fluide caloporteur en entrée ou en sortie de la pompe à chaleur (4), **caractérisé en ce qu'**il comprend des étapes consistant à :
a) acquérir (1005) des informations (S₁₀₁-S₁₀₄) relatives à l'ouverture de la ou des vanne(s) de régulation (101-104) ;
b) ajuster (1009, 1011, 1012) la valeur de la consigne de température (T_{c}) de la pompe à chaleur (4) en fonction des informations acquises à l'étape a).

2. Procédé selon la revendication 1, **caractérisé en ce qu'**il comprend une étape supplémentaire (1006) consistant à déterminer le taux d'ouverture maximum (Oₘₐₓ) des vannes de régulation (101-104) de différents émetteurs thermiques (81-84) et **en ce que**, lors de l'étape b), l'ajustement de la valeur de la consigne de température (T_{c}) est effectué en fonction du taux d'ouverture maximum (Oₘₐₓ).

3. Procédé selon la revendication 2, **caractérisé en ce qu'**il comprend une étape supplémentaire (1007) consistant à effectuer une moyenne (MOₘₐₓ) sur une période prédéterminée du taux d'ouverture maximum (Oₘₐₓ) des vannes de régulation (101-104) des différents émetteurs thermiques (81-84) et **en ce que**, lors de l'étape b), l'ajustement de la valeur de la consigne (T_{c}) est effectué en fonction du taux d'ouverture maximum moyen (MOₘₐₓ).

4. Procédé selon les revendications 2 ou 3, **caractérisé en ce qu'**il comprend au moins une étape supplémentaire consistant à comparer (1008, 1010) le taux d'ouverture maximum (Oₘₐₓ, MOₘₐₓ) des vannes de régulation (101-104) des différents émetteurs thermiques (81-84) avec au moins une valeur de seuil (V_{inf}, Vₛᵤₚ) et **en ce que**, lors de l'étape b), l'ajustement (1009, 1011, 1012) de la valeur de consigne (T_{c}) est effectué en fonction du résultat de cette comparaison.

5. Procédé selon la revendication 4, **caractérisé en ce qu'**il comprend une étape supplémentaire (1008, 1010) consistant à comparer le taux d'ouverture maximum (Oₘₐₓ, MOₘₐₓ) des vannes de régulation (101-104) des différents émetteurs thermiques (81-84) avec une première valeur de seuil (V_{inf}) et avec une deuxième valeur de seuil (Vₛᵤₚ) supérieure à la première valeur de seuil et **en ce que**, lors de l'étape b), la valeur de consigne (T_{c}) est diminuée (1009) si ce taux d'ouverture maximum (Oₘₐₓ, MOₘₐₓ) est inférieur à la première valeur de seuil (V_{inf}), la valeur de consigne (T_{c}) est maintenue constante (1012) si ce taux d'ouverture maximum (Oₘₐₓ, MOₘₐₓ) est compris entre les deux valeurs de seuil (V_{inf}, Vₛᵤₚ), et la valeur de consigne est augmentée (1011) si ce taux d'ouverture maximum (Oₘₐₓ, MOₘₐₓ) est supérieur à la deuxième valeur de seuil (Vₛᵤₚ).

6. Procédé selon la revendication 5, caractérisé en ce la première valeur de seuil (V_{inf}) est égale à 80 % et en ce que, la deuxième valeur de seuil (Vₛᵤₚ) est égale à 95 %.

7. Procédé selon l'une des revendications précédentes, **caractérisé en ce que** le fonctionnement de la pompe à chaleur (4) est piloté (1004) en contrôlant l'alimentation électrique d'au moins un moteur électrique (42, 44) appartenant à la pompe à chaleur, en fonction de la valeur de la consigne de température (T_{c}) ajustée à l'étape b).

8. Procédé selon l'une des revendications précédentes, **caractérisé en ce que** les étapes a) et b) (1005, 1009, 1011, 1012) sont effectuées à intervalles réguliers, avec une fréquence comprise entre deux et dix minutes, de préférence de l'ordre de cinq minutes.

9. Installation (2) de régulation de température dans un bâtiment (B) comprenant une pompe à chaleur (4) agissant sur la température d'un fluide caloporteur, au moins un émetteur thermique (81-84) dont l'alimentation en fluide caloporteur à partir de la pompe à chaleur est contrôlée par une vanne de régulation (101-104), et une unité de commande (12) apte à piloter la pompe à chaleur au moyen d'une consigne de température (T_{c}) du fluide caloporteur en entrée ou en sortie de la pompe à chaleur (4),
**caractérisée en ce qu'**elle comprend :
- des moyens de détection (161-164) de l'ouverture des vannes de régulation (101-104), et
- des moyens de transmission (181-184), à partir des moyens de détection (161-164) et vers l'unité de commande (12), d'une information (S₁₀₁-S₁₀₄), relative à l'ouverture des vannes de régulation (101-104),
et **en ce que** l'unité de commande (12) est apte à ajuster (1009, 1011, 1012) la valeur de consigne (T_{c}) de température en fonction de l'information (S₁₀₁-S₁₀₄) reçue des moyens de détection (161-164).

10. Installation (2) selon la revendication 9, **caractérisée en ce que** la pompe à chaleur (4) comprend au moins un moteur électrique (42, 44) piloté (1004) par l'unité de commande (12) en fonction de la valeur de consigne de température (T_{c}).

## Patentansprüche

1. Verfahren zur Steuerung einer Anlage (2) zur Temperaturregulierung in einem Gebäude (B), wobei die Anlage eine Wärmepumpe (4), welche auf die Temperatur eines Wärmeübertragungsmittels wirkt, und mindestens einen Heizkörper (81-84) umfasst, dessen Wärmeübertragungsmittelversorgung seitens der Wärmepumpe (4) durch ein Regelventil (101-104) kontrolliert wird, wobei in dem Verfahren der Betrieb der Wärmepumpe (4) mittels einer Solltemperatur (T_{c}) des Wärmeübertragungsmittels beim Eintritt in die Wärmepumpe (4) oder beim Austritt aus derselben gesteuert wird (1004), **dadurch gekennzeichnet, dass** das Verfahren die folgenden Schritte umfasst:
a) Beschaffen (1005) von Informationen (S₁₀₁-S₁₀₄) bezüglich des Öffnens des Regelventils oder der Regelventile (101-104);
b) Anpassen (1009, 1011, 1012) des Solltemperaturwertes (T_{c}) der Wärmepumpe (4) in Abhängigkeit von den in Schritt a) beschafften Informationen.

2. Verfahren nach Anspruch 1, **dadurch gekennzeichnet, dass** das Verfahren einen zusätzlichen Schritt (1006) umfasst, in dem die maximale Öffnungsrate (Oₘₐₓ) der Regelventile (101-104) von verschiedenen Heizkörpern (81-84) bestimmt wird, und dass in Schritt b) der Solltemperaturwert (T_{c}) in Abhängigkeit von der maximalen Öffnungsrate (Oₘₐₓ) angepasst wird.

3. Verfahren nach Anspruch 2, **dadurch gekennzeichnet, dass** das Verfahren einen zusätzlichen Schritt (1007) umfasst, in dem ein Mittelwert (MOₘₐₓ) für einen vorbestimmten Zeitraum der maximalen Öffnungsrate (Oₘₐₓ) der Regelventile (101-104) der verschiedenen Heizkörper (81-84) errechnet wird, und dass in Schritt b) der Sollwert (T_{c}) in Abhängigkeit von der durchschnittlichen maximalen Öffnungsrate (MOₘₐₓ) angepasst wird.

4. Verfahren nach einem der Ansprüche 2 oder 3, **dadurch gekennzeichnet, dass** das Verfahren mindestens einen zusätzlichen Schritt umfasst, in dem die maximale Öffnungsrate (Oₘₐₓ, MOₘₐₓ) der Regelventile (101-104) der verschiedenen Heizkörper (81-84) mit mindestens einem Schwellenwert (V_{inf}, Vₛᵤₚ) verglichen wird (1008, 1010), und dass in Schritt b) der Sollwert (T_{c}) in Abhängigkeit von dem Ergebnis dieses Vergleiches angepasst wird (1009, 1011, 1012).

5. Verfahren nach Anspruch 4, **dadurch gekennzeichnet, dass** das Verfahren einen zusätzlichen Schritt (1008, 1010) umfasst, in dem die maximale Öffnungsrate (Oₘₐₓ, MOₘₐₓ) der Regelventile (101-104) der verschiedenen Heizkörper (81-84) mit einem ersten Schwellenwert (V_{inf}) und mit einem zweiten Schwellenwert (Vₛᵤₚ), welcher höher ist als der erste Schwellenwert, verglichen wird, und dass in Schritt b) der Sollwert (T_{c}) gesenkt wird (1009), wenn die maximale Öffnungsrate (Oₘₐₓ, MOₘₐₓ) geringer als der erste Schwellenwert (V_{inf}) ist, der Sollwert (T_{c}) konstant gehalten wird (1012), wenn die maximale Öffnungsrate (Oₘₐₓ, MOₘₐₓ) zwischen den beiden Schwellenwerten (V_{inf}, Vₛᵤₚ) liegt, und der Sollwert angehoben wird (1011), wenn die maximale Öffnungsrate (Oₘₐₓ, MOₘₐₓ) höher als der zweite Schwellenwert (Vₛᵤₚ) ist.

6. Verfahren nach Anspruch 5, **dadurch gekennzeichnet, dass** der erste Schwellenwert (V_{inf}) 80 % entspricht und dass der zweite Schwellenwert (Vₛᵤₚ) 95 % entspricht.

7. Verfahren nach einem der vorangehenden Ansprüche, **dadurch gekennzeichnet, dass** der Betrieb der Wärmepumpe (4) durch Kontrollieren der elektrischen Versorgung mindestens eines Elektromotors (42, 44) der Wärmepumpe gesteuert wird (1004), in Abhängigkeit von dem in Schritt b) angepassten Solltemperaturwert (T_{c}).

8. Verfahren nach einem der vorangehenden Ansprüche, **dadurch gekennzeichnet, dass** die Schritte a) und b) (1005, 1009, 1011, 1012) in regelmäßigen Intervallen durchgeführt werden, wobei das Intervall zwischen zwei und zehn Minuten liegt, vorzugsweise etwa fünf Minuten beträgt.

9. Anlage (2) zur Temperaturregulierung in einem Gebäude (B), umfassend eine Wärmepumpe (4), welche auf die Temperatur eines Wärmeübertragungsmittels wirkt, mindestens einen Heizkörper (81-84), dessen Wärmeübertragungsmittelversorgung seitens der Wärmepumpe durch ein Regelventil (101-104) kontrolliert wird, und eine Steuereinheit (12), welche zum Steuern der Wärmepumpe mittels einer Solltemperatur (T_{c}) des Wärmeübertragungsmittels beim Eintritt in die Wärmepumpe (4) oder beim Austritt aus derselben geeignet ist, **dadurch gekennzeichnet, dass** die Anlage Folgendes umfasst:
- Mittel (161-164) zum Detektieren des Öffnens der Regelventile (101-104), und
- Mittel (181-184) zum Übermitteln einer Information (S₁₀₁-S₁₀₄) bezüglich des Öffnens der Regelventile (101-104), seitens der Detektionsmittel (161-164) an die Steuereinheit (12),
und dass die Steuereinheit (12) dazu geeignet ist, den Solltemperaturwert (T_{c}) in Abhängigkeit von der von den Detektionsmitteln (161-164) empfangenen Information (S₁₀₁-S₁₀₄) anzupassen (1009, 1011, 1012).

10. Anlage (2) nach Anspruch 9, **dadurch gekennzeichnet, dass** die Wärmepumpe (4) mindestens einen Elektromotor (42, 44) umfasst, welcher durch die Steuereinheit (12) in Abhängigkeit von dem Soll-temperaturwert (T_{c}) gesteuert wird (1004).

## Claims

1. Method for controlling a system (2) for regulating temperature in a building (B), this system comprising a heat pump (4), which acts on the temperature of a heat transfer fluid, and at least one heat emitter (81 -84), in which the supply of heat transfer fluid from the heat pump (4) is controlled by a control valve (101-104), in which method the operation of the heat pump (4) is controlled (1004) by means of a temperature setpoint (T_{c}) of the heat transfer fluid at the inlet or outlet of the heat pump (4), **characterised in that** it comprises steps consisting of:
a) acquiring (1005) data (S₁₀₁-S₁₀₄) relating to the opening of the control valve or valves (101-104);
b) adjusting (1009, 1011, 1012) the value of the temperature setpoint (T_{c}) of the heat pump (4) in dependence on the data acquired in step a).

2. Method according to claim 1, **characterised in that** it comprises an additional step (1006) consisting of determining the maximum opening rate (Oₘₐₓ) of the control valves (101-104) of different heat emitters (81-84), and **in that** during step b) the adjustment of the value of the temperature setpoint (T_{c}) is conducted in dependence on the maximum opening rate (Oₘₐₓ).

3. Method according to claim 2, **characterised in that** it comprises an additional step (1007) consisting of taking a mean (MOₘₐₓ) of the maximum opening rate (Oₘₐₓ) of the control valves (101-104) of the different heat emitters (81-84) over a predetermined period, and **in that** during step b) the adjustment of the value of the setpoint (T_{c}) is conducted in dependence on the mean maximum opening rate (MOₘₐₓ).

4. Method according to claims 2 or 3, **characterised in that** it comprises at least one additional step consisting of comparing (1008, 1010) the maximum opening rate (Oₘₐₓ, MOₘₐₓ) of the control valves (101-104) of the different heat emitters (81-84) with at least one threshold value (Vᵢₙₜ, Vₛᵤₚ), and **in that** during step b) the adjustment (1009, 1011, 1012) of the setpoint value (T_{c}) is conducted in dependence on the result of this comparison.

5. Method according to claim 4, **characterised in that** it comprises an additional step (1008, 1010) consisting of comparing the maximum opening rate (Oₘₐₓ, MOₘₐₓ) of the control valves (101-104) of the different heat emitters (81-84) with a first threshold value (Vᵢₙₜ) and with a second threshold value (Vₛᵤₚ) higher that the first threshold value, and **in that** during step b) the setpoint value (T_{c}) is reduced (1009) if this maximum opening rate (Oₘₐₓ, MOₘₐₓ) is lower than the first threshold value (Vᵢₙₜ), the setpoint value (T_{c}) is kept constant (1012) if this maximum opening rate (Oₘₐₓ, MOₘₐₓ) lies between the two threshold values (Vᵢₙₜ, Vₛᵤₚ) and the setpoint value is increased (1011) if this maximum opening rate (Oₘₐₓ, MOₘₐₓ) is higher than the second threshold value (Vₛᵤₚ).

6. Method according to claim 5, **characterised in that** the first threshold value (Vᵢₙₜ) is equal to 80% and **in that** the second threshold value (Vₛᵤₚ) is equal to 95%.

7. Method according to one of the preceding claims, **characterised in that** the operation of the heat pump (4) is controlled (1004) by controlling the electric power supply of at least one electric motor (42, 44) belonging to the heat pump in dependence on the value of the temperature setpoint (T_{c}) adjusted in step b).

8. Method according to one of the preceding claims, **characterised in that** steps a) and b) (1005, 1009, 1011, 1012) are conducted at regular intervals at a frequency of between two and ten minutes, preferably in the order of five minutes.

9. System (2) for regulating temperature in a building (B) comprising a heat pump (4), which acts on the temperature of a heat transfer fluid, at least one heat emitter (81-84), in which the supply of heat transfer fluid from the heat pump is controlled by a control valve (101-104), and a control unit (12) capable of controlling the heat pump by means of a temperature setpoint (T_{c}) of the heat transfer fluid at the inlet or outlet of the heat pump (4),
**characterised in that** it comprises:
• means for detecting (161-164) the opening of the control valves (101-104), and
• means for transmitting a data item (S₁₀₁-S₁₀₄) relating to the opening of the control valves (101-104) from the detection means (161-164) to the control unit (12),
and **in that** the control unit (12) is capable of adjusting (1009, 1011, 1012) the temperature setpoint value (T_{c}) in dependence on the data item (S₁₀₁-S₁₀₄) received from the detection means (161-164).

10. System (2) according to claim 9, **characterised in that** the heat pump (4) comprises at least one electric motor (42, 44) controlled (1004) by the control unit (12) in dependence on the temperature setpoint value (T_{c}).
